# EUROPEAN PATENT APPLICATION

(11) **EP 1 083 158 A2**
(43) Date of publication of application: **14.03.2001**
(21) Application number: 00116227.0
(22) Date of filing: 04.08.2000
(51) Int. Cl.: C04B 35/26, H01F 1/34

(54) **Magnetic ferrit material**

(30) Priority: 09.09.1999 JP 25550199
(71) Applicant: TDK Corporation, Chuo-ku, Tokyo 103-8272 (JP)
(72) Inventor: Saita, Hitoshi, Chuo-ku, Tokyo 103-8272 (JP); Sato, Naoyoshi, Chuo-ku, Tokyo 103-8272 (JP); Tada, Emiko, Chuo-ku, Tokyo 103-8272 (JP); Takagawa, Kenya, Chuo-ku, Tokyo 103-8272 (JP); Yasuhara, Katsushi, Chuo-ku, Tokyo 103-8272 (JP); Kuroda, Tomofumi, Chuo-ku, Tokyo 103-8272 (JP); Ishida, Shigetoshi, Chuo-ku, Tokyo 103-8272 (JP)
(74) Representative: HOFFMANN - EITLE

(57) **Abstract**

There is disclosed a magnetic ferrite material which mainly contains zinc oxide in a range of 7.0 to 9.0 mol% in terms of ZnO, manganese oxide in a range of 36.8 to 39.2 mol% in terms of MnO, and a residual of iron oxide, and contains cobalt oxide as a sub component in a range of 2500 to 4500 ppm in terms of Co₃O₄, and in which a minimum value of a power loss in a temperature range of 20 to 100°C is 400 kW/m³ or less, and a difference between the maximum value and minimum value of the power loss in the temperature range of 20 to 100°C is 150 kW/m³ or less.

## Description

### BACKGROUND OF THE INVENTION

The present invention relates to a magnetic ferrite material, particularly to an MnZn-based magnetic ferrite material for a transformer to be used in the magnetic core of a switching power supply, and the like.

The MnZn-based magnetic ferrite material has heretofore been used mainly as a transformer material for a communication apparatus and a power supply. Different from other magnetic ferrite materials, the MnZn-based magnetic ferrite material is characterized in that it has a high saturation magnetic flux density, permeability is also high, and power loss is low during the use as the transformer.

In order to realize a highly efficient power suplly, the development of a transformer material with the low absolute value of the power loss is indispensable. However, even with the use of the transformer material with the low power loss, when the minimum value of the power loss is in the vicinity of the operation temperature of the power supply (usually, 50 to 70°C), the temperature of the transformer core rises with the temperature rise of the transformer material itself, and the power loss increases by generated heat. Therefore, the power loss is stably reduced by usually using the transformer material in which the minimum value of the power loss is set on the side of a higher temperature (around 100°C) than the vicinity of the power supply operation temperature.

However, when the magnetic ferrite material is used in the power supply, in order to sufficiently fulfill magnetic properties such as the low power loss of the magnetic ferrite material, it is intrinsically desired to realize the lower power loss in the vicinity of the operation temperature of the power supply. Therefore, when the minimum value of the power loss is intentionally set to deviate toward the high temperature from the vicinity of the power supply operation temperature in order to stabilize the low power loss as described above, the magnetic properties of the magnetic ferrite material are not sufficiently fulfilled. Furthermore, in order to avoid the increase of the power loss by the above-described heat generated by the transformer material itself, it is desired that the change of the power loss be small in a wide temperature range.

To meet the desires, as the technical developments for a purpose of reducing the power loss change in a wide temperature range, there are proposed Japanese Patent Application Laid-Open No. 108109/1986, Japanese Patent Publication No. 33755/1992, Japanese Patent Application Laid-Open Nos. 290925/1994, 191011/1996, 2866/1997, 134815/1997, and the like.

Among the above-described technical developments, the Japanese Patent Application Laid-Open No. 191011/1996 discloses a ferrite material with a low power loss and a small power loss change in a wide temperature range. Moreover, the Japanese Patent Application Laid-Open No. 191011/1996 discloses a ferrite material in which the change of the power loss is small in a temperature range of 40°C from a 60°C lower temperature side to a 20°C lower temperature side than the temperature at which the power loss is minimized. However, the transformer material for the power supply is required to have a small power loss change in a wider temperature range.

Moreover, it is disclosed in the Japanese Patent Application Laid-Open No. 134815/1997 that the addition of CoO and Nb₂O₅ can lower the power loss and flatten the power loss output minimum value. However, the power loss is not sufficiently lowered and the power loss change in a wide temperature range is not sufficiently flattened. As the transformer material, strongly desired is the magnetic ferrite material in which a lower power loss is realized and the change of the power loss is small in a wider temperature range.

### SUMMARY OF THE INVENTION

The present invention has been developed in consideration of the above-described situation, and an object thereof is to provide an MnZn-based magnetic ferrite material in which a power loss is low and a power loss change is small in a wide temperature range.

To achieve this objects, according to the present invention, there is provided a magnetic ferrite material which mainly contains iron oxide, zinc oxide and manganese oxide, contains zinc oxide in a range of 7.0 to 9.0 mol% in terms of ZnO, manganese oxide in a range of 36.8 to 39.2 mol% in terms of MnO, and a residual of iron oxide, and contains cobalt oxide as a sub component in a range of 2500 to 4500 ppm in terms of Co₃O₄, and in which a power loss minimum value in a temperature range of 20 to 100°C is 400 kW/m³ or less, and a difference between the maximum value and minimum value of the power loss in the temperature range of 20 to 100°C is 150 kW/m³ or less.

Moreover, in preferable embodiment, the magnetic ferrite material of the present invention is constituted so that the minimum value of the power loss in the temperature range of 20 to 100°C is 350 kW/m³ or less.

Furthermore, in preferable embodiment, the magnetic ferrite material of the present invention is constituted so that the difference between the maximum value and minimum value of the power loss in the temperature range of 20 to 100°C is 50 kW/m³ or less.

Additionally, in preferable embodiment, the magnetic ferrite material of the present invention is constituted so that the content of iron oxide is in a range of 53.8 to 54.2 mol% in terms of Fe₂O₃.

In the magnetic ferrite material of the present invention, the content of zinc oxide and manganese oxide as the main components, and the content of cobalt oxide as the sub component are in predetermined range, the power loss in the temperature range of 20 to 100°C is peculiarly low, that is, the power loss minimum value is 400 kW/m³ or less, and the difference between the maximum value and minimum value of the power loss is 150 kW/m³ or less. For example, when the material is used as the power supply transformer material, the transformer material power loss is maintained at a remarkably low level from the time when the power supply is driven (in the vicinity of the room temperature) to the operation temperature (around 50 to 70°C), so that the transformer material itself generates little heat and temperature rise is depressed. Moreover, even when the temperature of the transformer material rises to a high temperature range (around 100°C) for some causes, the low power loss is maintained, and a high-performance power supply can be realized. Furthermore, since various temperatures at which the power loss is minimized can be selected, the degree of freedom in design becomes high with respect to the power supply operation temperature.

### BRIEF DESCRIPTION OF THE DRAWING

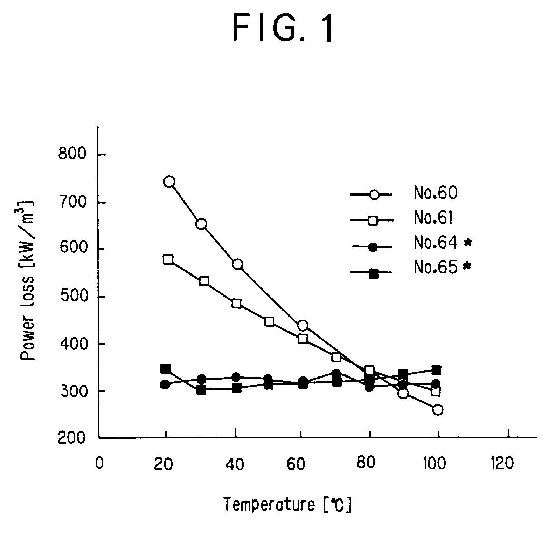

Fig. 1 is a diagram showing the measurement result of power loss in a temperature range of 20 to 100°C in an embodiment.

### DETAILED DESCRIPTION OF THE PREFERRED EMBODIMENT

An embodiment of the present invention will be described hereinafter.

In the present invention, as a result of a study on the content of iron oxide, zinc oxide, and manganese oxide as the main components of a magnetic MnZn ferrite material and the content of cobalt oxide added as a sub component, it was possible to obtain a magnetic ferrite material in which power loss in a wide temperature range of 20 to 100°C is remarkably reduced and power loss change in a wide temperature range of 20 to 100°C is moderated in the predetermined range of the content, specifically in which a power loss minimum value is 400 kW/m³ or less and a difference between the maximum value and minimum value of the power loss is 150 kW/m³ or less.

Specifically, the magnetic ferrite material of the present invention contains zinc oxide in a range of 7.0 to 9.0 mol% in terms of ZnO, manganese oxide in a range of 36.8 to 39.2 mol% in terms of MnO, and a residual of iron oxide (preferably in a range of 53.8 to 54.2 mol% in terms of Fe₂O₃), and contains cobalt oxide as the sub component in a range of 2500 to 4500 ppm in terms of Co₃O₄, preferably 3000 to 4500 ppm. Moreover, the power loss minimum value in the temperature range of 20 to 100°C is 400 kW/m³ or less, preferably 350 kW/m³ or less, and the difference between the maximum value and minimum value of the power loss in the temperature range of 20 to 100°C is 150 kW/m³ or less, preferably 50 kW/m³ or less.

Here, the power loss in the present invention means the value measured on the condition that an alternating current magnetic field with a frequency of 100 kHz and an exciting magnetic flux density of 200 mT is applied in a predetermined temperature.

When the content of iron oxide, zinc oxide and manganese oxide as the main components of the magnetic ferrite material of the present invention deviates from the above-described range, the effect of remarkably reducing the power loss change in a wide temperature range by the addition of cobalt oxide cannot be obtained, or the absolute value of the power loss undesirably increases. Moreover, when the content of cobalt oxide is less than 2500 ppm, the effect of moderating the power loss change in a wide temperature cannot be obtained, and when the content exceeds 4500 ppm, the power loss, particularly the power loss in the vicinity of the room temperature remarkably increases.

Additionally, for the magnetic ferrite material of the present invention, in addition to cobalt oxide, a slight amount of additives contributing to the low power loss, such as silicon oxide, calcium oxide, niobium oxide, zirconium oxide, vanadium oxide, and tantalum oxide, may be added for a purpose of lowering the power loss. In this case, as the ranges of the additives, preferable are about 50 to 150 ppm of silicon oxide in terms of SiO₂, about 300 to 1200 ppm of calcium oxide in terms of CaCO₃, about 50 to 1000 ppm of niobium oxide, vanadium oxide or tantalum oxide in terms of Nb₂O₅, V₂O₅ or Ta₂O₅, and about 10 to 450 ppm of zirconium oxide in terms of ZrO₂.

The above-described magnetic ferrite material of the present invention can be manufactured by calcining a raw material containing iron oxide, zinc oxide, manganese oxide, and cobalt oxide so that the composition after the sintering is placed in the above-described range, and forming the calcined powder into a desired shape to sinter (1200 to 1400°C). Additionally, the time to add cobalt oxide is not limited, and for example, after calcining the raw material containing iron oxide, zinc oxide, and manganese oxide, cobalt oxide may be added and sintered similarly as described above.

Additionally, in the present invention, the above-described main component raw material (iron oxide, zinc oxide, manganese oxide) is not limited, and a compound oxide powder containing two or more types of metals may be used as the main component raw material. The compound oxide powder can usually be manufactured by oxidizing/roasting chloride. For example, the compound oxide powder containing Fe, Mn and Zn can be obtained by oxidizing/roasting an aqueous solution containing iron chloride, manganese chloride and zinc chloride. The compound oxide usually includes a spinel phase. Additionally, zinc chloride has a high vapor pressure, and composition deviation easily occurs. Therefore, the main component raw material may be prepared by using the aqueous solution containing iron chloride and manganese chloride to manufacture the compound oxide powder containing Fe and Mn, and mixing the powder and the zinc oxide powder or the zinc ferrite powder.

Concrete examples will next be described to explain the present invention in more detail.

First, Fe₂O₃, MnO and ZnO were weighed as the main components to obtain the amounts shown in Tables 1 to 6, and wet-mixed in a ball mill for 16 hours. Furthermore, the mixture powder was calcined at 850°C for two hours.

Subsequently, by adding SiO₂, CaCO₃, Nb₂O₅, ZrO₂, Co₃O₄ as the sub components to the above-described calcined powder to obtain the blend amounts shown in Tables 1 to 6 with respect to the main components, and performing wet grinding, calcined powders (samples 1 to 95) were obtained.

Subsequently, after adding polyvinyl alcohol as a binder to the respective obtained calcined powders by a solid content of 0.8 wt% and performing granulation, press molding was performed with a pressure of 1 ton/cm² to form a toroidal shape (outer diameter of 24 mm, inner diameter of 12 mm, thickness of 5.5 mm). Subsequently, the molded material was sintered under an N₂-O₂ mixture gas atmosphere with a controlled oxygen partial pressure at 1300°C for five hours to obtain the magnetic ferrite materials (samples 1 to 95). Additionally, when a final composition was measured by fluorescent X ray spectroscopy, the composition corresponded to a blend composition.

With respect to the respective obtained toroidal magnetic ferrite materials, the power loss was measured by an alternating-current B-H analyzer (IWATSU-8232 manufactured by Iwatsaki Electric Co., Ltd.) at an exciting magnetic flux density of 200 mT and frequency of 100 kHz. The minimum value of the power loss in the temperature range of 20 to 100°C, the temperature at which the minimum value is indicated, and the difference between the maximum value and the minimum value are shown in the following Tables 1 to 6. Moreover, for the samples 64, 65 as the magnetic ferrite materials of the present invention, and the comparative samples 60, 61, the measurement result of the power loss in the temperature range of 20 to 100°C is shown in Fig. 1.

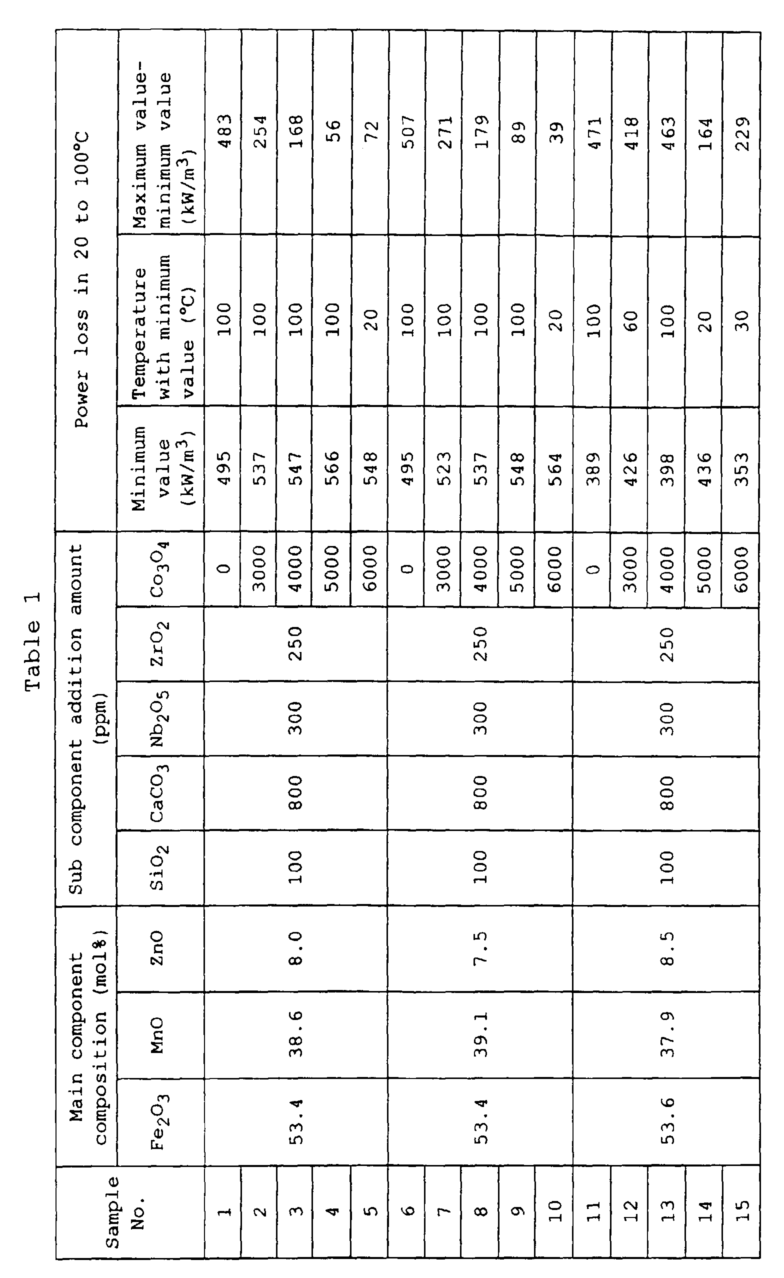

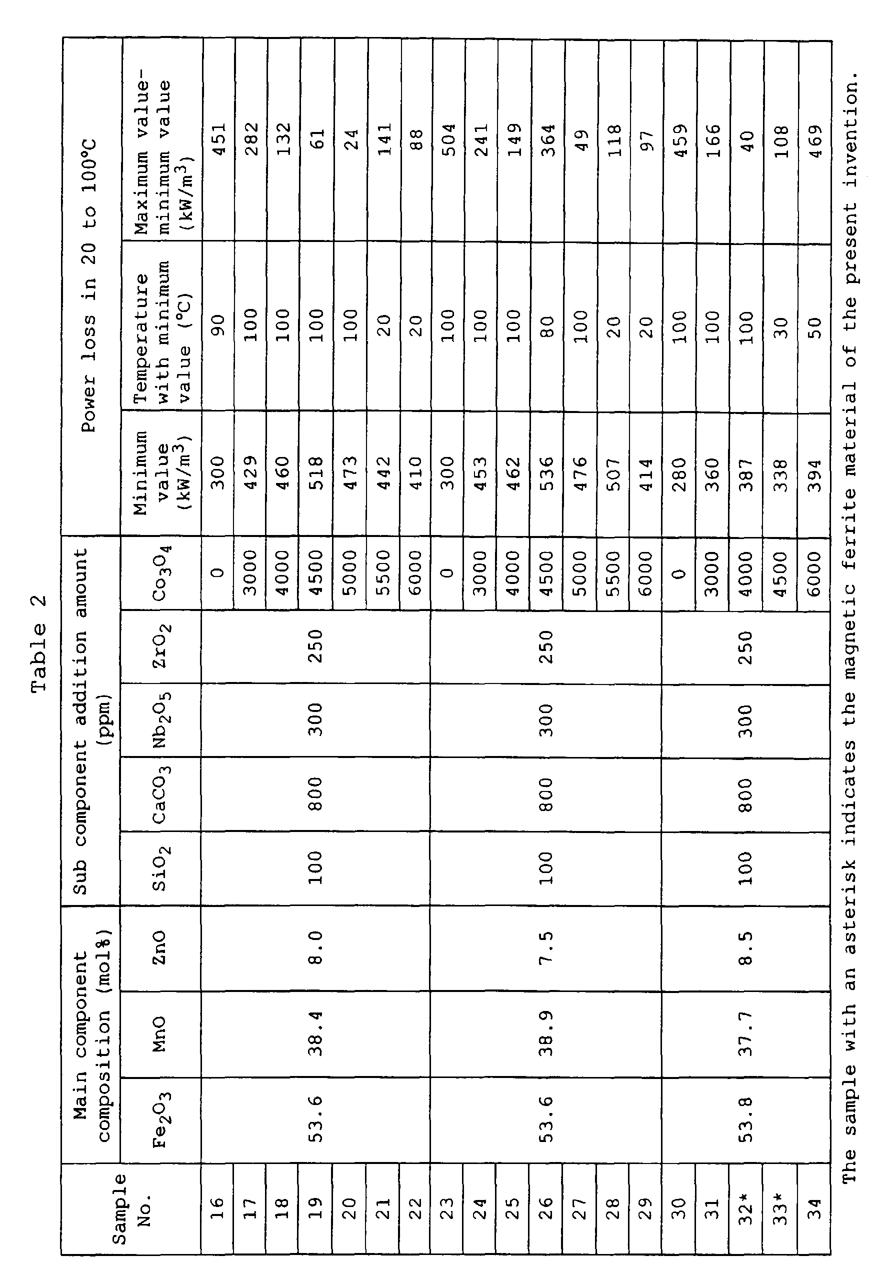

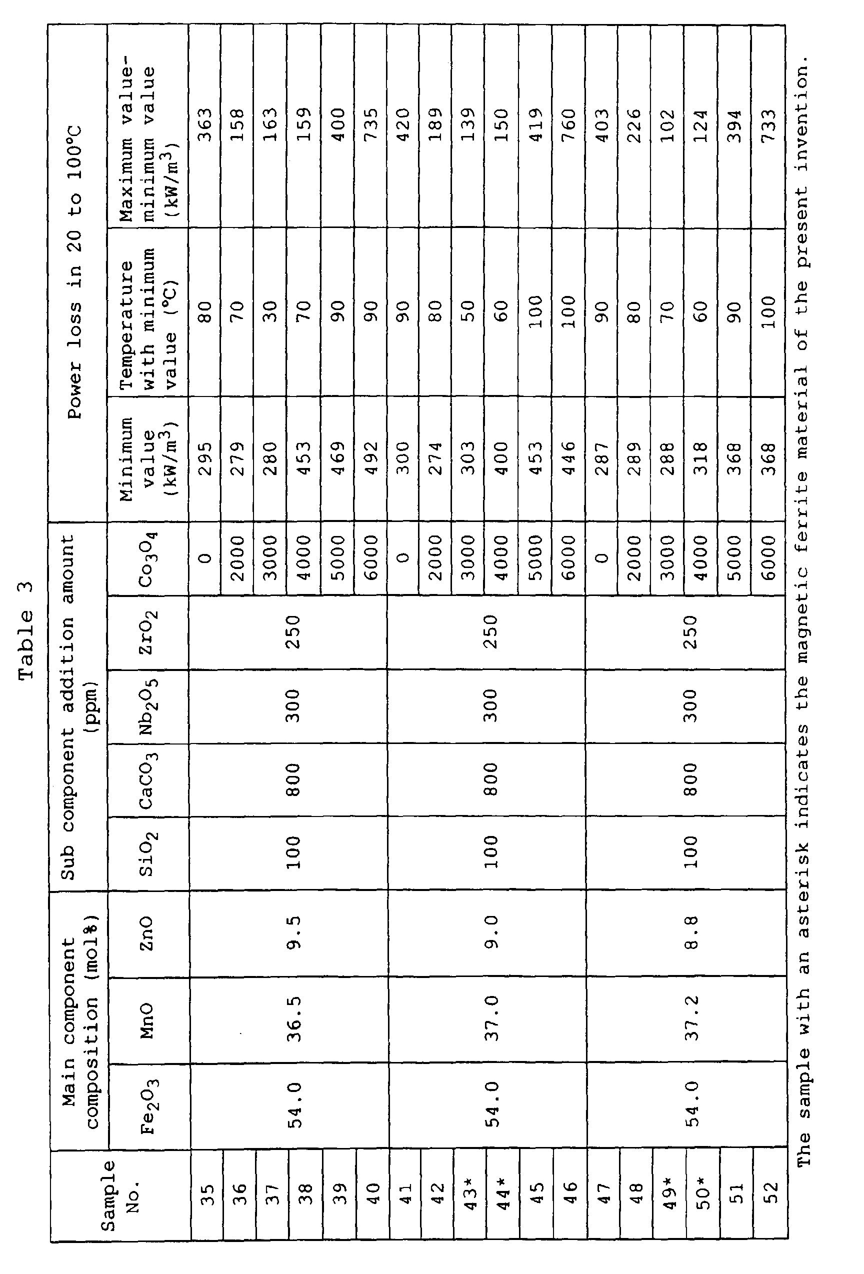

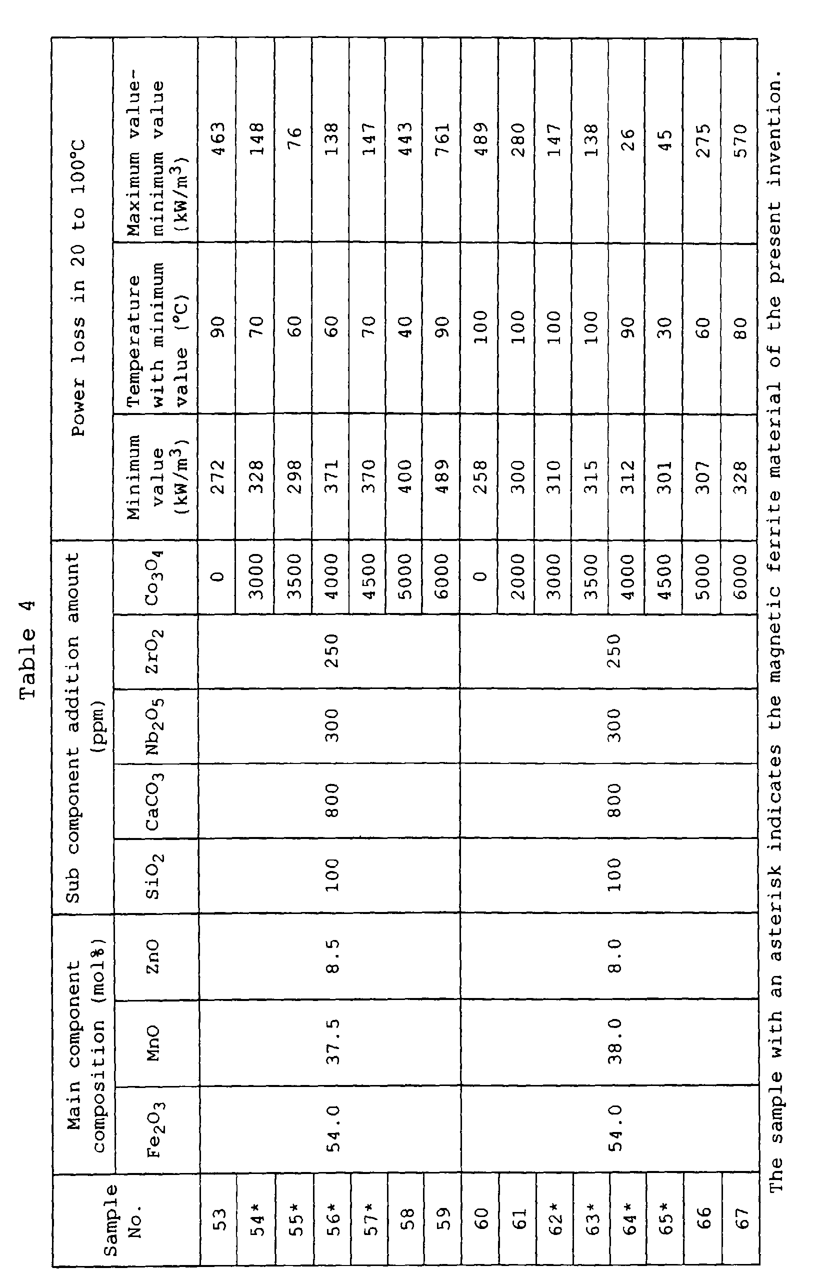

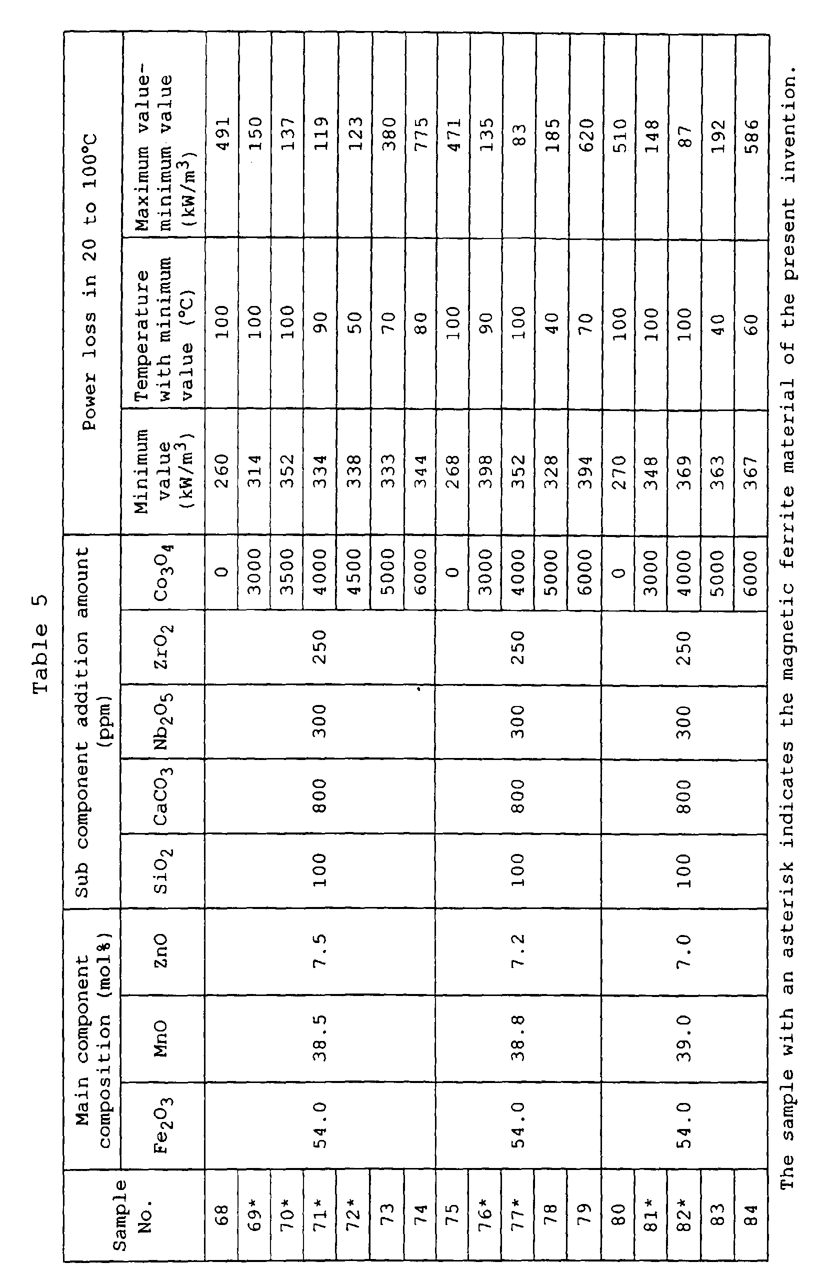

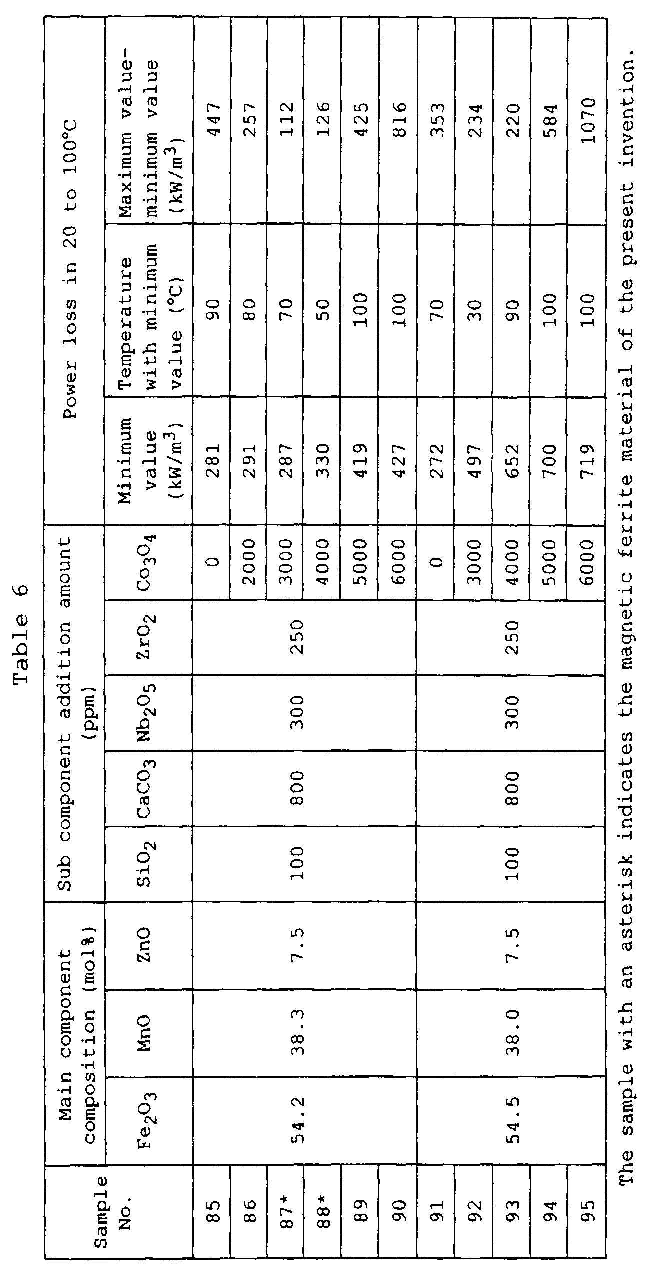

As shown in Tables 1 to 6, it has been confirmed that the samples 32, 33, 43, 44, 49, 50, 54 to 57, 62 to 65, 69 to 72, 76, 77, 81, 82, 87, 88 as the magnetic ferrite materials of the present invention contain, as the main components, ZnO in a range of 7.0 to 9.0 mol%, MnO in a range of 36.8 to 39.2 mol%, and a residual of Fe₂O₃, and contain Co₃O₄ as the sub component in a range of 2500 to 4500 ppm, the power loss in the temperature range of 20 to 100°C is peculiarly low (the minimum value of the power loss is 400 kW/m³ or less, and the difference between the maximum value and minimum value of the power loss is 150 kW/m³ or less) and that the power loss change in the temperature range of 20 to 100°C is flattened.

Among these magnetic ferrite materials of the present invention, for the samples 33, 43, 49, 50, 54, 55, 62 to 65, 69, 71, 72, 81, 87, 88, the minimum value of the power loss in the temperature range of 20 to 100°C is 350 kW/m³ or less, and for the samples 32, 64, 65, the difference between the maximum value and minimum value of the power loss in the temperature range of 20 to 100°C is 50 kW/m³ or less, so that the superior low power loss is realized. Furthermore, for the samples 64, 65, the minimum value of the power loss in the temperature range of 20 to 100°C is 350 kW/m³ or less, the difference between the maximum value and minimum value of the power loss is 50 kW/m³ or less, and the power loss change in the temperature range of 20 to 100°C is further flattened.

Moreover, it has been confirmed that in the magnetic ferrite materials of the present invention, there are materials indicating various temperatures as the temperature at which the power loss is minimized.

Furthermore, as shown in Fig. 1, for the samples 64, 65 as the magnetic ferrite materials of the present invention, as compared with the comparative samples 60, 61, the power loss in the temperature range of 20 to 100°C is low and the power loss change in the temperature range of 20 to 100°C is little and flattened.

## Claims

1. A magnetic ferrite material mainly containing iron oxide, zinc oxide and manganese oxide, containing zinc oxide in a range of 7.0 to 9.0 mol% in terms of ZnO, manganese oxide in a range of 36.8 to 39.2 mol% in terms of MnO, and a residual of iron oxide, and containing cobalt oxide as a sub component in a range of 2500 to 4500 ppm in terms of Co₃O₄, wherein a minimum value of a power loss in a temperature range of 20 to 100°C is 400 kW/m³ or less, and a difference between the maximum value and minimum value of the power loss in the temperature range of 20 to 100°C is 150 kW/m³ or less.

2. The magnetic ferrite material according to claim 1, wherein the minimum value of the power loss in the temperature range of 20 to 100°C is 350 kW/m³ or less.

3. The magnetic ferrite material according to claim 1 or 2, wherein the difference between the maximum value and the minimum value of the power loss in the temperature range of 20 to 100°C is 50 kW/m³ or less.

4. The magnetic ferrite material according to claims 1 to 3, wherein the content of iron oxide is in a range of 53.8 to 54.2 mol% in terms of Fe₂O₃.
